# EUROPÄISCHE PATENTSCHRIFT

(11) **EP 1 502 143 B1**
(45) Veröffentlichungstag und Bekanntmachung des Hinweises auf die Patenterteilung: **30.08.2006**
(21) Anmeldenummer: 03747356.8
(22) Anmeldetag: 25.04.2003
(51) Int. Cl.: G02B 6/38

(54) **KUPPLUNG FÜR GLASFASERVERBINDER MIT NACHRÜSTBARER SICHERHEITSKLAPPE**
COUPLING FOR GLASS FIBER CONNECTORS WITH RETROFITTABLE SECURITY VALVE
RACCORD POUR CONNECTEURS ENFICHABLES, DOTE D'UN CLAPET DE SECURITE POUVANT ETRE INSTALLE APRES COUP

(30) Priorität: 03.05.2002 DE 10219892
(43) Veröffentlichungstag der Anmeldung: 02.02.2005
(73) Patentinhaber: ADC GMBH, 14167 Berlin (DE)
(72) Erfinder: KAHLE, Eberhard, 12557 Berlin (DE); KRAMER, Anne, 12103 Berlin (DE); ADOMEIT, Jörg, 12307 Berlin (DE)
(86) Internationale Anmeldenummer: PCT/EP2003/004293
(87) Internationale Veröffentlichungsnummer: WO 2003/093889

(56) Entgegenhaltungen:
- EP-A- 0 610 676
- EP-A- 0 788 002
- EP-A- 1 271 204
- WO-A-94/18586
- WO-A-99/40466
- DE-A- 4 330 212
- DE-A- 10 139 670
- US-A- 4 277 135
- US-A- 4 767 179
- US-A- 5 104 242
- US-A- 5 708 745
- US-B1- 6 375 363
- PATENT ABSTRACTS OF JAPAN vol. 2000, no. 24, 11. Mai 2001 (2001-05-11) -& JP 2001 194562 A (FURUKAWA ELECTRIC CO LTD), 19. Juli 2001 (2001-07-19) -& US 6 461 054 B1 (FURUKAWA ELECTRIC CO LTD) 8. Oktober 2002 (2002-10-08)
- PATENT ABSTRACTS OF JAPAN vol. 2002, no. 08, 5. August 2002 (2002-08-05) -& JP 2002 116350 A (HIROSE ELECTRIC CO LTD), 19. April 2002 (2002-04-19)

## Beschreibung

Die Erfindung bezieht sich auf eine Kupplung zur Aufnahme von Steckverbindern gemäß dem Oberbegriff des Patentanspruchs 1.

Es ist bekannt, Glasfasern mit Steckverbindern mittels Kupplungen koaxial zu verbinden. Die Steckverbinder sind für eine zentrische Fixierung an dem freien Ende mit einer Ferrule ausgebildet. Die beiden Ferrulen der zu verbindenden Stecker sind in eine Hülse der entsprechenden Kupplung einführbar, wobei sich die Ferrulen an den Stirnflächen berühren. Die Hülse ist in einem Hülsenaufnehmer gelagert. Die äußere Form eines Kupplungsgehäuses ist aufgrund gegebener Geometrien einer bekannten Montageöffnung festgelegt. Durch Glasfaserkabel werden Lichtwellen übertragen. Um bei einseitig gezogenem Stecker ein Austreten einer schädlichen . Laserstrahlung zu verhindern, ist eine Schutzvorrichtung notwendig.

Eine Kupplung mit Schutzvorrichtung ist beispielsweise aus der EP 0 599 784 A1 bekannt, wobei vor der Hülsenöffnung in Einsteckrichtung eine bewegliche Schutzklappe angeordnet ist, welche in einer Schließstellung die Hülsenöffnung wenigstens teilweise überlagert und welche zum Einstecken des Steckerstifts in eine Öffnungsstellung bewegbar ist, wobei die Vorrichtung ein inneres Buchsengehäuse aufweist, das in ein äußeres Buchsengehäuse eingeschoben ist und die Schutzklappe zwischen den beiden Buchsengehäusen gehalten und schwenkbar gelagert ist. Nachteil einer derartigen Schutzvorrichtung ist der Platzbedarf des Schwenkmechanismus, so daß eine Realisierung bei geringen Kupplungsaußenabmaßen nicht möglich ist. Zudem ist die aufwendige Mechanik kostenintensiv in der Fertigung.

Aus der JP 2002 116350 und der DE 4330212 sind Kupplungen mit separaten Auschlussstück mit Abdeckung und Kupplungsgehäuse mit Hülse bekannt. Die Abdeckungen bestehen aus einer Blattfeder aus Metall, die in einer Vertiefung innerhalb des Auschlussstükes durch das Einstecken eines entsprechenden Steckers gedrückt wird. Die Blattfeder ist dabei entweder gekrümmt oder so ausgeführt, dass die Blattfeder eine Ferrule des Steckers zu keinen Zeitpunkt des Steck vorgangs berührt.

Der Erfindung liegt daher das technische Problem zugrunde, eine Kupplung zur Aufnahme von mit Glasfaserkabeln verbundenen Steckverbindern zu schaffen, welche bei geringen Kupplungsaußenabmaßen einen Schutz vor einem Austritt schädlicher Laserstrahlung bietet und kostengünstig herstellbar ist.

Die Lösung des Problems ergibt sich durch den Gegenstand mit den Merkmalen des Anspruchs 1. Weitere vorteilhafte Ausgestaltungen der Erfindung ergeben sich aus den Unteransprüchen.

Der Austritt schädlicher Laserstrahlung aus einer Hülsenöffnung einer Steckeraufnahme ist durch eine ihr zugeordneten Abdeckung verhinderbar, wobei die Abdeckung eine gebogene metallische Blattfeder umfaßt, welche in einer ersten unbelasteten Position die Hülsenöffnung abdeckt und durch Einführen eines Steckers in die Steckeraufnahme in eine zweite Position bewegbar ist, wobei in der zweiten Position die Hülsenöffnung frei liegt, und die Biegung der Blattfeder derart gewählt ist, daß die Ferrule zu keinem Zeitpunkt des Steckvorgangs mit der Blattfeder in Kontakt tritt. Die Blattfeder ist dabei derart zu wählen, daß kein unnötiger Kraftaufwand für den Steckvorgang notwendig und eine starke Belastung des Steckers aufgrund der Federkraft der Blattfeder im gesteckten Zustand vermieden wird. Gleichzeitig ist durch die Elastizität der Blattfeder gewährleistet, daß bei gezogenem Stecker eine zuverlässige Rückführung in die unbelastete Lage erfolgt. Eine metallische Abdeckung der Hülsenöffnung zeichnet sich durch eine gute thermische Stabilität aus. Außerdem ist durch die metallischen Blattfeder eine sehr dünne Ausführung der Abdeckung möglich, wobei dennoch eine gute Abschirmung der Hülsenöffnung gegeben ist. Auch eingefärbte Kunststoffklappen für eine

Abdeckung der Hülsenöffnung erfordern eine wesentlich dickere Ausführung. Um in diesem Fall eine Aufnahme des Steckers durch die Abdeckung nicht zu behindern, ist eine Veränderung der Außenform des Kupplungsgehäuses notwendig. Veränderungen der Außenform sind jedoch für eine Gewährleistung der Normkompatibilität oder einer kompakten Anreihbarkeit weiterer Kupplungen unerwünscht.

In einer bevorzugten Ausführungsform ist die Abdeckung einstückig mit einer Blattfeder und zwei Flügeln ausgebildet. Über die Flügel ist die Abdeckung tangential an eine Gehäusewand anbindbar, wobei die Blattfeder durch diese Anbindung möglichst wenig in ihrer Bewegung gestört ist. Die Flügel sind dabei begrenzt durch die maximalen Außenmaße der Kupplung.

Die Aufnahme der Abdeckung ist als separates Anschlußstück ausgebildet, welches mit dem Kupplungsgehäuse verbindbar ist. Dadurch sind getrennte Herstellungen des Anschlußstücks und des Kupplungsgehäuses möglich. Dies ist vorteilhaft, da beispielsweise das Material den jeweiligen Anforderungen entsprechend wählbar ist. Auch sind Einsatzgebiete von Kupplungen denkbar, die keine Schutzvorrichtung gegen austretendes Laserlicht verlangen. Eine zweiteilige Ausführung der Schutzvorrichtung und des Kupplungsgehäuses erlaubt einen gezielten Einsatz der Schutzvorrichtung. Die einteilige Ausführungsform ist jedoch stabiler und kann daher für spezielle Anwendungen notwendig sein.

In einer Ausführungsform ist die Abdeckung durch Warmprägen tangential zu der Gehäusewand befestigt. Die Anbindung durch Warmprägen ist kostengünstig realisierbar. Zudem ist eine Herstellung der Anbindung sowohl bei einer einteiligen als auch bei einer zweiteiligen Ausführung des Kupplungsgehäuses und des Anschlußstücks aus Kunststoff möglich.

In einer bevorzugten Ausführungsform ist das Anschlußstück als Kunststoffteil ausgebildet, wobei die Abdeckung durch Umspritzen mit dem Anschlußstück verbindbar ist. Dadurch ist eine sehr gute Anbindung der Abdeckung an das Anschlußstück realisierbar.

In einer weiteren Ausführungsform ist das Anschlußstück als separates Blechteil ausgebildet, wobei die als Blattfeder ausgeführte Abdeckung in dem Blechteil integriert ist. Für die Anbindung der Blattfeder an das Anschlußstück sind verschiedene Verfahren wie Punktschweißen oder Kleben denkbar. Die Ausführung des Anschlußstücks als Blechteil weist eine höhere Stabilität als eine Kunststoffausführung auf.

In einer Weiterbildung ist das Anschlußstück einstückig mit der Abdeckung ausgebildet. Diese Weiterbildung zeichnet sich durch besondere Stabilität aus.

In einer bevorzugten Ausführungsform erfolgt die Anbindung des Anschlußstücks an das Kupplungsgehäuse durch eine Rastbefestigung. Eine Rastbefestigung ist von Vorteil, da zum einen eine automatisierte Montage einfach realisierbar, zum anderen aber auch eine lösbare Verbindung gegeben ist. Dadurch sind die Kupplungen an den jeweiligen Einsatz gezielt anpaßbar.

In einer weiteren Ausführungsform ist das Anschlußstück für eine sichere Anbindung mit Zentrierstiften ausgebildet.

Die Erfindung wird nachfolgend anhand eines bevorzugten Ausführungsbeispiels näher erläutert. Die Abbildungen zeigen schematisch:
- Fig. 1: eine Draufsicht auf eine Kupplung zur koaxialen Glasfaserverbindung und einen Steckverbinder,
- Fig. 2: einen Schnitt durch die in Fig. 1 gezeigte Draufsicht,
- Fig. 3: eine perspektivische Darstellung eines Kupplungsgehäuses und eines Anschlußstücks,
- Fig. 4: eine perspektivische Darstellung des Anschlußstücks,
- Fig. 5: eine perspektivische Darstellung einer Abdeckung,
- Fig. 6 (a) - (c): Schnittdarstellungen der Kupplung und des Steckverbinders im Steckvorgang,

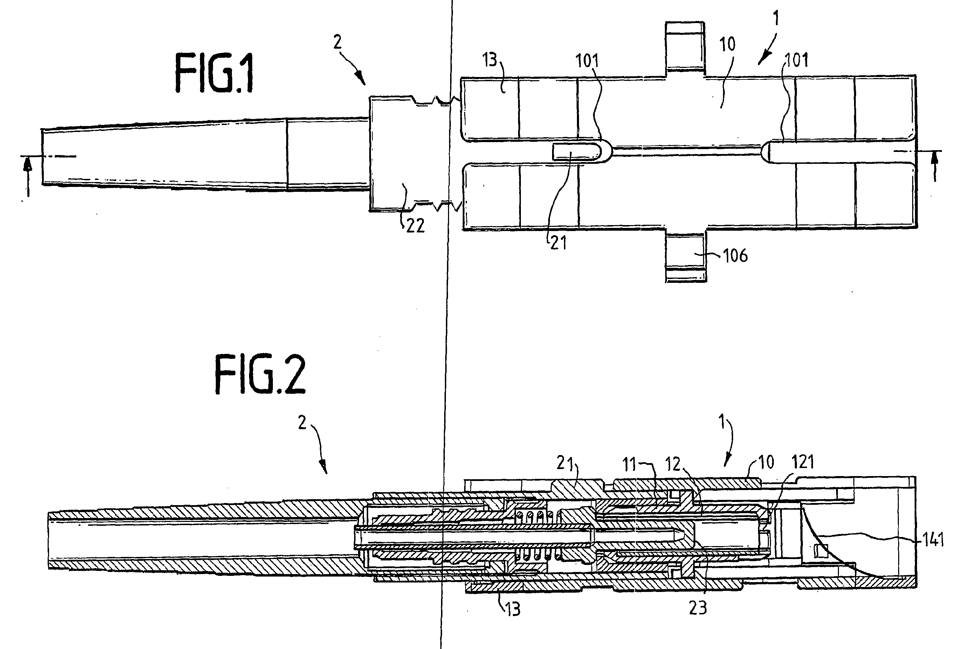

Fig. 1 zeigt schematisch eine Kupplung 1 für die koaxiale Verbindung von Glasfaserkabeln. Die Kupplung umfaßt ein Kupplungsgehäuse 10, in das von jedem Ende her ein Steckverbinder 2 einsteckbar ist. Das Kupplungsgehäuse 10 ist mit Flanschen 106 ausgebildet, durch welche die Kupplung 1 an eine nicht dargestellte Montageöffnung anbindbar ist. Auf das Kupplungsgehäuse 10 ist ein Anschlußstück 13 rastbar. Die Länge des Anschlußstückes 13 ist dabei derart zu wählen, daß ein Zugriff auf den vorgesehene Griffbereich 22 des Steckverbinders 2 im gesteckten Zustand nicht versperrt wird. Der Steckverbinder 2 ist für eine Unterstützung der Führung in dem Kupplungsgehäuse 10 mit einer Feder 21 ausgebildet, welche in eine dazu komplementäre Nut 101 am Kupplungsgehäuse 10 sowie in eine Nut 131 am Anschlußstück 13 einführbar ist.

Fig. 2 zeigt einen Schnitt durch die Kupplung 1 und den Steckverbinder 2. Die Bezeichnungen entsprechen dabei Fig. 1. ln dem Kupplungsgehäuse 10 ist ein Hülsenaufnehmer 11 mit einer Hülse 12 gelagert. Der Steckverbinder 2 ist an seinem freien Ende mit einer Ferrule 23 ausgebildet. Zwei zu verbindende Steckverbinder 2 treten in der Hülse 12 über die Stirnflächen der Ferrulen 23 in Kontakt, so daß über die mit den Steckverbindern 2 ausgebildeten Glasfaserkabel Lichtwellen übertragen werden können. Bei einem einseitig gesteckten Steckverbinder 2 ist ein Austritt von Lichtwellen aus einer Hülsenöffnung 121 zu verhindern. Die Hülsenöffnung 121 ist zu diesem Zweck über eine Blattfeder 141 abdeckbar. Die Blattfeder 141 ist sehr dünn zu wählen, so daß diese bei aufgesetztem Steckverbinder 2 eng in einer Vertiefung der Gehäusewand anliegt und eine Aufnahme des Steckverbinders 2 nicht behindert.

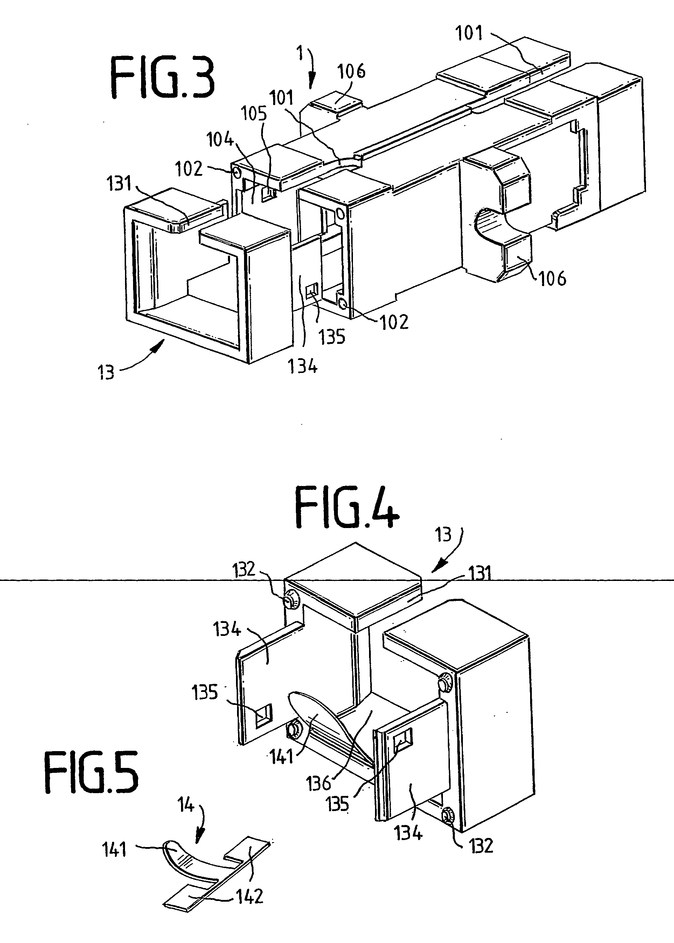

Fig. 3 zeigt eine perspektivische Darstellung der Kupplung 1. Die Bezeichnungen entsprechen dabei den Fig. 1 und 2. Das Anschlußstück 13 ist auf das Kupplungsgehäuse 10 rastbar. Für die Rastbefestigung ist das Anschlußstück 13 mit Rastzungen 134 ausgebildet, welche Durchbrüche 135 aufweisen. Das Kupplungsgehäuse 10 ist an den Kontaktflächen 104 der Rastbefestigung mit Rastnasen 105 ausgebildet, welche in die Durchbrüche 135 rasten. Durch das Anschlußstück 13 werden Breite und Tiefe der Kupplung 1 nicht verändert, so daß eine Anbindung an eine nicht dargestellte Frontplatte sowie eine Anreihung weiterer Kupplungen nicht beeinträchtigt wird. Prinzipiell ist es auch möglich das Anschlußstück 13 mit Rastnasen und das Kupplungsgehäuse 10 mit Durchbrüchen auszubilden.

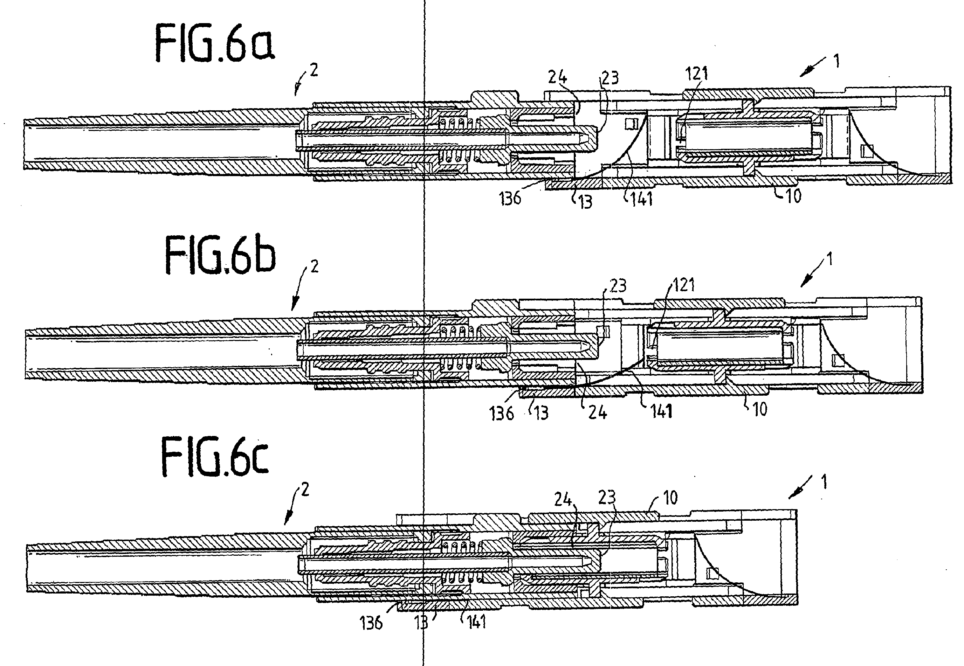

Fig. 4 zeigt schematisch das Anschlußstück 13. Die Bezeichnungen entsprechen dabei den Fig. 1 bis 3. Die Anbindung des Anschlußstücks 13 an das nicht dargestellte Kupplungsgehäuse 10 ist mittels Zentrierstifte 132 ausrichtbar, welche in komplementäre Bohrungen 102 (siehe Fig. 3) im Kupplungsgehäuse 10 greifen. Die Durchbrüche 135 sowie die kompfementären Rastnasen 105 sind zueinander höhenversetzt angeordnet. Dadurch ist eine einfache Ausarbeitung der Rastnasen 105 in dem in Fig.1 dargestellten Kupplungsgehäuse 10 möglich. Andere Formen und Anordnungen der Rastnasen 105 sind jedoch denkbar. Außerdem ist es denkbar, daß die Rastzungen 134 sich nicht über die gesamte Breite des Anschlußstücks 13 erstrecken, sondern jeweils nur einen Bereich um die Rastnasen 105 abdecken. Zusätzliche Rastbefestigungen an den zwei verbleibende Seitenflächen sind ebenfalls denkbar. Allerdings darf eine zusätzliche Rastbefestigung nicht die zur Orientierung bzw. Positionierung der Steckverbinder 2 angebrachte Nut 131 verdecken oder die tangential zur Seitenfläche 136 angebrachte Blattfeder 141 in ihrer Bewegung behindern. Die dargestellte Rastbefestigung, umfassend zwei Rastzungen an gegenüberliegenden Gehäusewänden ist daher besonders vorteilhaft.

Fig. 5 zeigt eine mit Blattfeder 141 und Flügeln 142 ausgebildete Abdeckung 14. Die Anbindung der Abdeckung 14 an die Kupplung 1 erfolgt mittels der Flügel 142. Die Größe der Flügel 142 ist dabei durch die Außenmaße der Kupplung 1 beschränkt. Prinzipiell kann die Blattfeder 141 aber auch direkt über eine tangentiale Verlängerung der Blattfeder angebunden werden.

Fig. 6 (a) - (c) zeigen schematisch verschiedene Zeitpunkte während eines Steckprozesses. Fig. 6 (a) zeigt den Beginn des Steckprozesses. Die Blattfeder 141 ist zu diesem Zeitpunkt unbelastet und deckt die Hülsenöffnung 121 ab. Die Blattfeder 141 ist mit einer Krümmung ausgebildet, welche an dem einen Ende tangential zur Seitenfläche 136 verläuft. Die Ferrule 23 des Steckverbinders 2 ist hoch präzise gearbeitet und daher sehr empfindlich. Durch den Steckprozeß darf es aus diesem Grund und aufgrund einer Verschmutzungsgefahr beispielsweise durch Metallabrieb zu keiner Berührung der Ferrule 23 mit der Blattfeder 141 kommen. Die Krümmung der Blattfeder 141 ist somit entsprechend der Geometrie des Steckverbinders 2 anzupassen. Fig. 6 (b) zeigt die Verdrängung der Blattfeder 141 durch eine breitere Abschlußfläche 24 des Steckverbinders 2. Dabei ist ein ausreichender Abstand der Ferrule 23 zu der Blattfeder 141 gewährleistet. Ein Laserstrahlaustritt aus dem Kupplungsgehäuse 10 in axialer Richtung aufgrund der Freigabe der Hülsenöffnung 121 ist durch den Steckverbinder 2 verhindert. Fig. 6 (c) zeigt das Ende des Steckvorgangs. Der Steckverbinder 2 ist von Rastmitteln in der Kupplung 1 aufgenommen. Die Blattfeder 141 ist dabei durch den Steckverbinder 2 in die Vertiefung der Gehäusewand verdrängt. Durch die sehr dünne Ausführung der Blattfeder 141 ist eine gute Anschmiegung in die Vertiefung der Gehäusewand gegeben. Das Anbringen der Abdeckung 14 für einen Schutz vor austretender Laserstrahlung erfordert daher weder eine Veränderung gegebener Steckverbinder 2 noch eine Vergrößerung des Kupplungsgehäuses 10.

Die beschriebene Schutzvorrichtung bietet nur einen Schutz vor einem Austreten schädlicher Laserstrahlung. Ein durch diese Vorrichtung gegebener Schutz vor einem Eintreten von Staub und anderen Verunreinigungen in die Hülse 12 ist in den meisten Fällen nicht ausreichend. Für einen zusätzlichen Staubschutz bei gezogenem Steckverbinder 2 ist beispielsweise eine Staubschutzkappe einzusetzen.

Durch eine Ausbildung der Kupplung mit einer erfindungsgemäßen Schutzvorrichtung und einem Staubschutz ist bei gezogenem Stecker sowohl ein Schutz der Kupplung vor eindringenden Verunreinigungen als auch ein Schutz der Umwelt vor austretender Laserstrahlung gegeben. Die Schutzvorrichtung und der Staubschutz bedingen sich jedoch nicht gegenseitig.

### Bezugszeichenliste

- 1: Kupplung
- 10: Kupplungsgehäuse
- 101: Nut
- 102: Bohrung
- 104: Kontaktfläche
- 105: Rastnase
- 106: Flansch
- 11: Hülsenaufnehmer
- 12: Hülse
- 121: Hülsenöffnung
- 13: Anschlußstück
- 131: Nut
- 132: Zentrierstift
- 134: Rastzunge
- 135: Durchbruch
- 136: Seitenfläche
- 14: Abdeckung
- 141: Blattfeder
- 142: Flügel
- 2: Steckverbinder
- 21: Feder
- 22: Griffbereich
- 23: Ferrule
- 24: Abschlußfläche

## Patentansprüche

1. Kupplung (1) zur Aufnahme mindestens zweier Steckverbinder (2) mit Ferrule die mit Glasfaserkabel verbunden sind, wobei die Kupplung mindestens zweiteilig mit einem Anschlussstück (13) und einem Kupplungs gehäuse (10) mit einer Hülse zur Aufnahme der Ferrulen ausgebildet ist, wobei mindestens eine bewegliche Abdeckung (14) in dem Anschlussstück integriert ist, welche einer Hülsenöffnung (121) zugeordnet ist, wobei die Abdeckung (14) in einer ersten Position die Hülsenöffnung (121) abdeckt und durch Einführen eines Steckverbinders (2) in eine zweite Position bewegbar ist, in welcher die Abdeckung (14) die Hülsenöffnung (121) frei gibt, wobei die Abdeckung (14) eine gebogene metallische Blattfeder (141) umfasst, wobei die Blattfeder (141) in der ersten Position unbelastet ist, wobei die Biegung der Blattfeder (141) derart gewählt ist, dass eine Ferrule (23) des Steckverbinders (2) zu keinem Zeitpunkt des Steckvorganges mit der Blattfeder (141) in Kontakt tritt, wobei die Blattfeder (141) in der zweiten Position in einer Vertiefung der Gehäusewand anliegt,
**dadurch gekennzeichnet, dass**
die Blattfeder (141) eine von einer Einsteckrichtung aus gesehene konkave Krümmung aufweist, die tangential zu einer Seitenfläche (136) des Anschlussstücks (13) angebracht ist, wobei neben dem sich tangential an die Seitenfläche (136) anschmiegenden Tell der Blattfeder (141) zwei Flügel (142) angeordnet sind über die die Anbindung der Abdeckung (14) an die inneren Gehäuseflächen des Anschlussstückes (13) erfolgt.

2. Kupplung (1) nach Anspruch 1. **dadurch gekennzeichnet, dass** das Anschlussstück (13) als Kunststoffteil ausgebildet ist.

3. Kupplung (1) nach Anspruch 2, **dadurch gekennzeichnet, dass** die Abdeckung (14) durch Umspritzen mit dem Anschlussstück (13) verbindbar ist.

4. Kupplung (1) nach einem der vorangegangenen Ansprüche, **dadurch gekennzeichnet, dass** das Anschlussstück (13) mit Rastmitteln ausgebildet ist und auf das Kupplungsgehäuse (10) aufrastbar ist.

5. Kupplung (1) nach Anspruch 4, **dadurch gekennzeichnet, dass** die Rastmittel des Anschlussstücks (13) als Durchbrüche (135) in Rastzungen (134) und die Rastmittel des Kupplungsgehäuses (10) als Rastnasen (105) ausgebildet sind.

6. Kupplung (1) nach einem der vorangegangenen Ansprüche, **dadurch gekennzeichnet, dass** die Verbindung des Anschlussstücks (13) mit dem Kupplungsgehäuse (10) zur Arretierung mit Zentrierstiften (132) ausgebildet ist

## Claims

1. Coupling (1) for accommodating at least two plug-in connectors (2) with a ferrule which are connected to fiber-optic cables, the coupling being designed at least in two parts with a connection piece (13) and a coupling housing (10) with a sleeve for accommodating the ferrules, at least one moveable covering (14) being integrated in the connection piece, and being assigned to a sleeve opening (121), it being the case that the covering (14), in a first position, covers the sleeve opening (121) and, by the introduction of a plug-in connector (2), can be moved into a second position, in which the covering (14) releases the sleeve opening (121), the covering (14) comprising a bent metallic leaf spring (141), the leaf spring (141) not being subjected to loading in the first position,
the bending of the leaf spring (141) being selected such that a ferrule (23) of the plug-in connector (2) does not come into contact with the leaf spring (141) at any point in time during the plug-in operation, it being the case that the leaf spring (141), in the second position, rests in a depression of the housing wall, **characterized in that** the leaf spring (141) has a concave curvature, as seen from a plug-in direction, which is provided tangentially in relation to a side surface (136) of the connection piece (13), two wings (142) being arranged alongside that part of the leaf spring (141) which is in close tangential contact with the side surface (136), and the wings attaching the covering (14) to the inner housing surfaces of the connection piece (13).

2. Coupling (1) according to Claim 1, **characterized in that** the connection piece (13) is designed as a plastic part.

3. Coupling (1) according to Claim 2, **characterized in that** the covering (14) can be connected to the connection piece (13) by injection-molding encapsulation.

4. Coupling (1) according to one of the preceding claims, **characterized in that** the connection piece (13) is designed with latching means and can be latched onto the coupling housing (10).

5. Coupling (1) according to Claim 4, **characterized in that** the latching means of the connection piece (13) are designed as through-passages (135) in latching tongues (134) and the latching means of the coupling housing (10) are designed as latching noses (105).

6. Coupling (1) according to one of the preceding claims, **characterized in that** the connection between the connection piece (13) and the coupling housing (10) is designed for arresting with centering pins (132).

## Revendications

1. Raccord (1), destiné à accueillir au moins deux connecteurs (2) avec ferrule, qui sont reliés à des câbles en fibre de verre, le raccord étant conçu en au moins deux éléments, avec une pièce de raccordement (13) et un boîtier d'accouplement (10) avec une douille pour loger les ferrules, au moins un cache mobile (14) qui est associé à une ouverture de douille (121) étant intégré dans la pièce de raccordement, le cache (14) recouvrant l'ouverture de douille (121) dans une première position et par introduction d'un connecteur (2) étant mobile dans une deuxième position, dans laquelle le cache (14) libère l'ouverture de douille (121), le cache (14) comprenant un ressort à lames métallique courbé (141), le ressort à lames (141) n'étant pas contraint dans la première position, la courbure du ressort à lames (141) étant choisie de façon telle qu'à aucun moment du processus d'enfichage une ferrule (23) du connecteur (2) n'entre en contact avec le ressort à lames (141), dans la deuxième position, le ressort à lames (141) s'appliquant sur un creux dans la paroi du boîtier, **caractérisé en ce que** le ressort à lames (141) comporte une courbure concave, vue à partir du sens d'enfichage, qui est ménagée de façon tangentielle à une surface latérale (136) de la pièce de raccordement (13), deux ailettes (142) assurant la liaison du cache (14) sur les surfaces intérieures du boîtier de la pièce de raccordement (13) étant disposées à côté de la partie du ressort à lames (141) qui épouse la surface latérale (136).

2. Raccord (1) selon la revendication 1, **caractérisé en ce que** la pièce de raccordement (13) est conçue en tant qu'un élément en matière plastique.

3. Raccord (1) selon la revendication 2, **caractérisé en ce que** le cache (14) peut être relié à la pièce de raccordement (13) par enrobage par extrusion.

4. Raccord (1) selon l'une quelconque des revendications précédentes, **caractérisé en ce que** la pièce de raccordement (13) est conçue avec des moyens d'enclenchement et **en ce que** le boîtier d'accouplement (10) est enclenchable.

5. Raccord (1) selon la revendication 4, **caractérisé en ce que** les moyens d'enclenchement de la pièce de raccordement (13) sont conçus en tant que jours (135) dans des languettes d'enclenchement (134) et **en ce que** les moyens d'enclenchement du boîtier de raccordement (10) sont conçus en tant que tenons d'enclenchement (105).

6. Raccord (1) selon l'une quelconque des revendications précédentes, **caractérisé en ce que** la liaison de la pièce de raccordement (13) sur le boîtier d'accouplement (10) est conçue avec des tiges de centrage (132) pour le blocage.
